# EUROPEAN PATENT SPECIFICATION

(11) **EP 3 015 590 B1**
(45) Date of publication and mention of the grant of the patent: **12.04.2017**
(21) Application number: 15190421.6
(22) Date of filing: 19.10.2015
(51) Int. Cl.: D06F 58/20

(54) **CLOTHES TREATING APPARATUS COMPRISING A COMPRESSOR**
VORRICHTUNG MIT EINEM VERDICHTER ZUR BEHANDLUNG VON KLEIDUNGSSTÜCKEN
APPAREIL DE TRAITEMENT DE VÊTEMENTS COMPRENANT UN COMPRESSEUR

(30) Priority: 28.10.2014 KR 20140147299
(43) Date of publication of application: 04.05.2016
(73) Proprietor: LG Electronics Inc., Seoul 07336 (KR)
(72) Inventor: KIM, Youngsuk, 08592 Seoul (KR); HONG, Sangwook, 08592 Seoul (KR); KIM, Hyojun, 08592 Seoul (KR)
(74) Representative: Ter Meer Steinmeister & Partner

(56) References cited:
- EP-A1- 2 281 934
- DE-U1-202014 000 975
- JP-A- 2005 337 079
- JP-A- 2011 167 223
- US-A- 4 676 473
- US-A- 5 222 374
- US-A1- 2014 208 603

## Description

### BACKGROUND OF THE INVENTION

### 1. Field of the Invention

This specification relates to a structure for supporting a compressor provided in a clothes treating apparatus.

### 2. Background of the Invention

A clothes treating apparatus commonly refers to a drying machine for drying clothes, a washing machine for washing and drying clothes, and a refresh apparatus for deodorizing or sterilizing clothes using steam.

The clothes treating apparatus employs a heat pump for supplying hot air or steam to clothes.

The heat pump includes an evaporator for dehumidifying humid air, a condenser for heating the dehumidified air, and a compressor connected to the evaporator to compress a refrigerant and supply the compressed refrigerant to the condenser.

The evaporator and the condenser refer to elements allowing for heat exchange between the refrigerant and surrounding air.

Therefore, performance of the compressor may decide an amount and temperature of hot air generated by the heat pump.

However, the compressor problematically generates vibration during a process of compressing the refrigerant.

If a capacity of the compressor increases to improve the performance of the compressor, a volume occupied by the compressor increases, which results in an increase in a volume of the clothes treating apparatus.

JP 2011 167223 A discloses a washing machine including an outer tub, a washing and spinning tub rotatably provided inside the outer tub, and a drying device having a heat pump provided with a compressor.

US 4 676 473 A discloses a vibration suppressing mounting bracket for mounting a compressor of a vehicle air conditioner within a housing.

JP 2005 337079 A discloses a sterling engine mounted to a mounting base board by a mounting member.

EP 2 281 934 A1 discloses a drum-type washing and drying machine including a heat pump placed above an outer tub for drying clothes loaded into a drum. A compressor is placed on a base.

US 2014/208603 A1 discloses a laundry treatment apparatus including a hot air supply device having a compressor and a compressor support member installed at an exterior of a connection duct to support the compressor.

DE 20 2014 000975 U1 discloses a household appliance. A compressor is mounted on a support.

### SUMMARY OF THE INVENTION

Therefore, an aspect of the detailed description is to provide a clothes treating apparatus having a fixing structure for fixing a compressor in the clothes treating apparatus.

Another aspect of the detailed description is to provide a clothes treating apparatus having a fixing structure for preventing vibration generated in a compressor from being transferred to the clothes treating apparatus.

Another aspect of the detailed description is to provide a clothes treating
apparatus having a fixing structure with a structure, by which a large compressor can be efficiently provided in the clothes treating apparatus. The objects are solved by the features of the independent claim.

To achieve these and other advantages and in accordance with the purpose of this specification, as embodied and broadly described herein, there is provided a clothes treating apparatus including a cabinet defining appearance thereof, a clothes receiving unit provided in the cabinet and configured to receive clothes therein, a hot air supply unit provided with a heat exchanger to heat air supplied into the clothes receiving unit and a compressor connected to the heat exchanger to compress a refrigerant, and a supporting unit provided in the cabinet to support the compressor, wherein the supporting unit includes a main bracket having a penetrating portion in which the compressor is accommodated, and a sub bracket extending from the main bracket.

The supporting unit may include the main bracket having the penetrating portion through which the compressor is inserted for installation, and the sub bracket extending from the main bracket.

The main bracket is fixed to a rear panel or a side panel of the cabinet.

The sub bracket is fixed to a front panel of the cabinet.

The hot air supply unit may further include a circulation passage provided at an upper portion of the clothes receiving unit and allowing air to circulate into the clothes receiving unit.

The sub bracket may be fixed to the circulation passage.

Also, the present invention may provide a clothes treating apparatus further including a clamp configured to fix the compressor to the main bracket.

The clamp may include a body fixing the compressor in a manner of
surrounding an outer surface of the compressor, and coupling portions provided at ends of the body to fix the body to the main bracket.

The body may include an upper body surrounding an upper portion of the compressor, and a lower body surrounding a lower portion of the compressor.

In accordance with one embodiment of the present invention, the clamp may be provided by one to fix the compressor to the main bracket. The one clamp may fix one side of the compressor to the main bracket.

In accordance with one embodiment of the present invention, the clamp may be provided by two to fix the compressor to the main bracket.

The present invention provides a clothes treating apparatus having a fixing structure for fixing a compressor in the clothes treating apparatus.

The present invention may provide a clothes treating apparatus having a fixing structure, capable of preventing vibration generated in a compressor from being transferred to the clothes treating apparatus.

The preset invention may provide a clothes treating apparatus having a fixing structure, capable of efficiently installing a large compressor in the clothes treating apparatus.

Further scope of applicability of the present application will become more apparent from the detailed description given hereinafter. However, it should be understood that the detailed description and specific examples, while indicating preferred embodiments of the invention, are given by way of illustration only, since various changes and modifications without departing from the scope of the invention as defined by the appended claims.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a sectional view of a clothes treating apparatus in accordance with one exemplary embodiment of the present invention;
FIG. 2 is a perspective view of a clothes treating apparatus in accordance with one exemplary embodiment of the present invention;
FIG. 3 is a perspective view of a heat exchanger of a clothes treating apparatus in accordance with one exemplary embodiment of the present invention;
FIG. 4 is a sectional view of a heat exchanger of a clothes treating apparatus in accordance with one exemplary embodiment of the present invention;
FIG. 5 is an exploded perspective view of a fixing structure provided in a clothes treating apparatus in accordance with one exemplary embodiment of the present invention; and
FIG. 6 is an exploded perspective view of a fixing structure provided in a clothes treating apparatus in accordance with another exemplary embodiment of the present invention.

### DETAILED DESCRIPTION OF THE INVENTION

Description will now be given in detail of the preferred embodiments according to the present invention, with reference to the accompanying drawings. Meanwhile, a configuration or control method to be described hereinafter is merely illustrative and will not limit the rights of the present invention. For the sake of brief description with reference to the drawings, the same or equivalent components may be provided with the same or similar reference numbers, and description thereof will not be repeated.

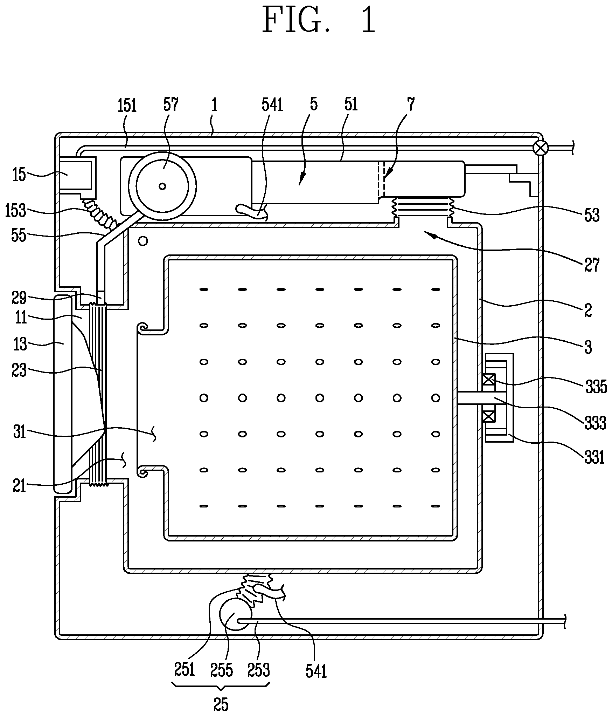

FIG. 1 illustrates one embodiment of a clothes treating apparatus according to the present invention. As illustrated in FIG. 1, a clothes treating apparatus 100 includes a cabinet 1 defining appearance of the apparatus, a clothes receiving unit 2 and 3 provided in the cabinet 1 to receive (store or accommodate) clothes therein, and a hot air supply unit 5 supplying hot air into the clothes receiving unit 2 and 3.

The cabinet 1 includes an introduction opening 11 through which clothes is introduced therein, and a door 13 rotatably coupled to the cabinet 1 to open and close the introduction opening 11.

When the clothes treating apparatus 100 according to the present invention is merely configured as a drying machine which has a clothes drying function, the clothes receiving unit 2 and 3 may include only a drum 3 rotatably disposed in the cabinet 1

However, when the clothes treating apparatus 100 is configured as an apparatus which has both functions of washing and drying clothes, the clothes treating apparatus 2 and 3 may include a tub 2 disposed in the cabinet 1 to store wash water therein, and a drum 3 rotatably disposed in the cabinet 2 to store the clothes therein.

The tub 2 has a cylindrical shape with a hollow inner space and is fixed in the cabinet 1. The tub 2 includes a tub introduction opening 21 formed at a front surface of the tub 2 facing the introduction opening 11, such that the clothes or laundry can be introduced and taken away therethrough.

A gasket 23 is provided between the tub introduction opening 11 and the introduction opening 11. The gasket 23 is a constituting element which prevents wash water stored in the tub 2 from being leaked out of the tub 2 and also prevents vibration generated in the tub 2 during rotation of the drum 3 from being transferred to the cabinet 1. Therefore, the gasket 23 may be made of a vibration-insulating material, such as rubber.

The tub 2 may be arranged in parallel to the ground, or to be inclined from the ground by a predetermined angle. However, when the tub 2 is inclined from the ground by the predetermined angle, the inclined angle of the tub 2 is preferably smaller than 90°.

An air exhaust portion 27 through which internal air of the tub 2 is exhausted is provided on an upper portion of a circumferential surface of the tub 2, and a water drain portion 25 through which the wash water stored in the tub 2 is discharged is provided below the tub 2.

The air exhaust portion 27 is provided on the upper surface of the tub 2, preferably, spaced apart from a straight line A, which passes through a center of the tub 2, by a predetermined distance L1 in a circumferential direction of the tub 2. This is for facilitating the internal air of the tub 2 to be discharged out of the tub 2 through the air exhaust portion 27 during the rotation of the drum 3.

The water drain portion 25 may include a first drain pipe 251 through which a drain pump 255 is connected to the tub 2, and a second drain pipe 253 guiding the wash water introduced into the drain pump 255 to the outside of the cabinet 1.

The tub 2 stores wash water that is supplied through a water supply pipe 151 which connects the tub 2 to a water supply source. Here, when a detergent supply unit 15 for supplying detergent is provided at the cabinet 1, the water supply pipe 151 may be configured to supply wash water to the detergent supply unit 15 therethrough. In this instance, the wash water supplied to the detergent supply unit 15 may then be supplied into the tub 2 through a detergent supply pipe 153.

The drum 3 may have a cylindrical shape with a hollow inner space, and be rotatably disposed in the tub 2. The drum 3 is rotatable by a driving unit provided at an outside of the tub 2.

In this instance, the driving unit may include a stator 335 fixed to a rear surface of the tub 2 to generate a magnetic field, a rotor 331 rotated by the magnetic field, and a rotation shaft 333 penetrating through the rear surface of the tub 2 to connect a rear surface of the drum 3 to the rotor 331.

In the meantime, the drum 3 may include a drum introduction opening 31 formed at a front surface thereof, so as to communicate with the introduction opening 11 and the tub introduction opening 21. A user may thus put clothes or laundry into the drum 3 and take the clothes stored in the drum 3 out of the cabinet 1 through the introduction opening 11.

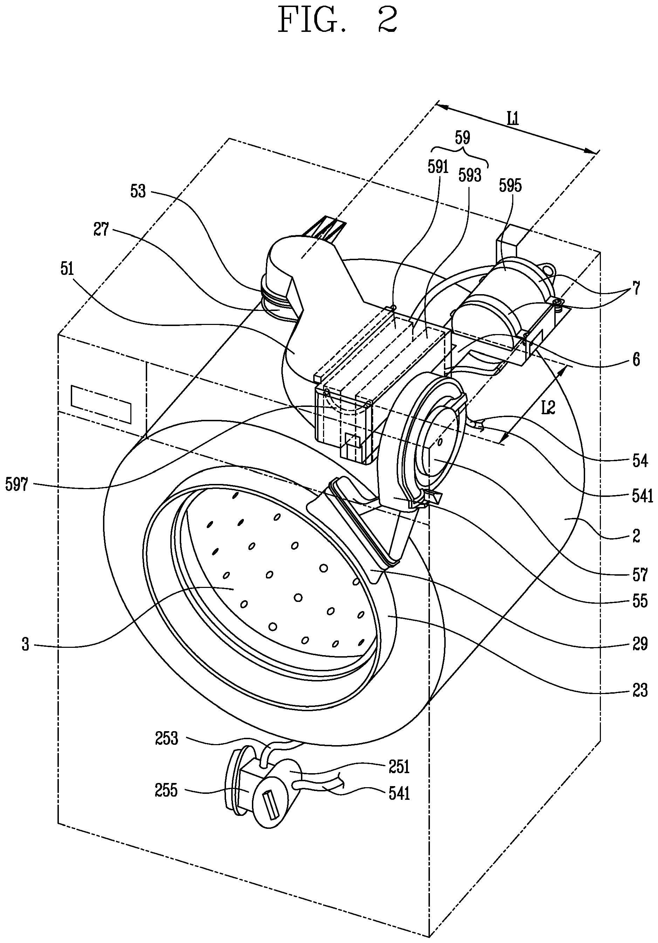

As illustrated in FIG. 2, the hot air supply unit 5 includes a circulation passage 51, 53 and 55 to guide air discharged from the tub 2 toward a front side of the tub 2, a blower 57 provided in the circulation passage 51, 53 and 55 to circulate internal air of the circulation passage, and a heat-exchanging unit 59 provided in the circulation passage 51, 53 and 55.

The circulation passage may include a first connection duct 53 connected to the upper portion of the circumferential surface of the tub 2, a duct 51 connected to the first connection duct 53 and provided with the heat-exchanging unit 59 therein, and a second connection duct 55 to guide air discharged from the duct 51 toward the front side of the tub 2.

The first connection duct 53 is a passage connected to the air exhaust portion 27 located at the upper portion of the circumferential surface of the tub 2, and preferably formed as a vibration-insulating member (rubber, etc.).

This is to prevent the vibration transferred to the tub 2 during the rotation of the drum from being carried to the heat-exchanging unit 59 located in the duct 51 through the first connection duct 53.

To more efficiently prevent the vibration generated in the tub 2 from being transferred to the duct 51 and the heat-exchanging unit 59, the first connection duct 53 may be formed in a shape of a bellows.

The second connection duct 55 may be connected to any area of the tub 2 if the area is allowed to guide the air discharged through the duct 51 toward the front side of the tub 2. FIG. 2 illustrates one example in which the second connection duct 55 allows air to be supplied into the tub 2 through the gasket 23. In this instance, the gasket 23 may further be provided with a supply portion 29 communicating with the second connection duct 55.

The blower 57 may be provided at the second connection duct 55. The blower 57 may include an impeller (not illustrated) located in the second connection duct 55, and an impeller motor (not illustrated) rotating the impeller.

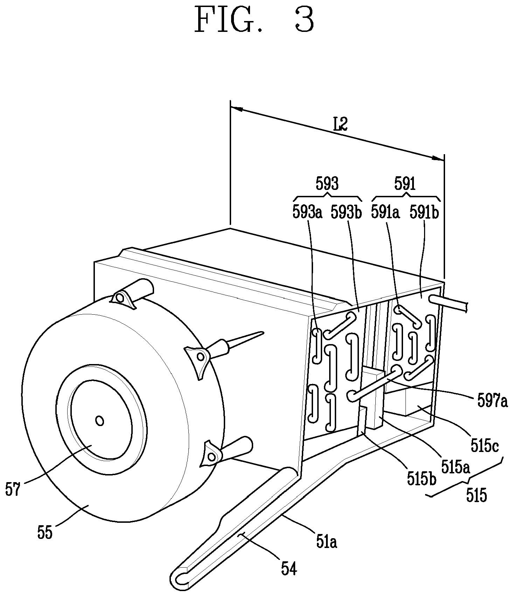

FIG. 3 illustrates one example in which the heat-exchanging unit 59 is configured as a heat pump.

In this instance, a first heat exchanger 591 (i.e., an evaporator) and a second heat exchanger 593 (i.e., a condenser) provided in the heat-exchanging unit 59 are fixed in the duct 51. A compressor 595 compresses a refrigerant discharged from the evaporator 591 and supplies the compressed refrigerant to the condenser 593. The refrigerant supplied to the condenser 593 should be supplied back to the evaporator 591 through an expansion apparatus.

The evaporator 591 may be provided with a first heat-exchanging plate 591 b, and a first refrigerant pipe 591 a fixed to the first heat exchanger 591 b.

The first heat exchanger 591 b may be configured as a plurality of metal plates which are fixed in parallel in a lengthwise direction of the circulation passage (an air flowing direction). In this instance, the plurality of first heat-exchanging plates 591 b may be disposed with being spaced apart from one another by a predetermined interval along a widthwise direction L2 of the circulation passage. The first refrigerant pipe 591 a provides a flow path of the refrigerant and is fixed to the first heat-exchanging plate 591 b.

In the evaporator 591, the refrigerant is evaporated by absorbing heat from air introduced into the duct 51. Therefore, the evaporator 591 serves to remove (dehumidify) moisture contained in air by cooling the air.

The duct 51 may further be provided with a condensed water discharge portion 54 through which moisture (condensed water) removed from air through the evaporator 591 is discharged out of the circulation passage. The condensed water discharge portion 54 may be connected to a water drain portion through a discharge pipe 541.

The condenser 593 condenses the refrigerant. Since heat generated during the process of condensing the refrigerant is transferred to air passing through the condenser, the condenser 593 serves to heat the air passed through the evaporator 591.

The condenser 593 may also be provided with a plurality of second heat-exchanging plates 593b, and a second refrigerant pipe 593a fixed to the second heat-exchanging plates 593b.

The evaporator 591 and the condenser 593 may be fixed to a first mounting surface 515 provided in the duct 51. The first mounting portion 515 may include a supporting portion 515c to support a lower surface of the evaporator 591, and a barrier wall 515a disposed between the evaporator 591 and the condenser 593. This structure is configured to prevent condensed water removed from air passed through the evaporator 591 from flowing into the condenser 593, and also facilitate the condensed water to flow toward the condensed water discharge portion 54.

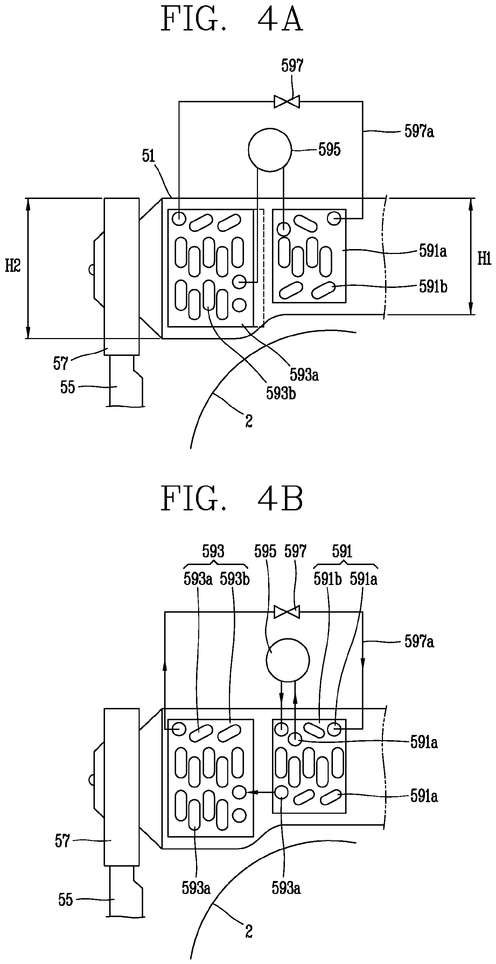

As illustrated in FIG. 4, the circulation passage according to the present invention is located on an upper portion of the circumferential surface of the tub 2, and accordingly, a space where the evaporator 591 is located and a space where the condenser 593 is located may have different volumes from each other.

If a duct height of a fixing area of the evaporator 591 is different from a duct height of a fixing area of the condenser 593, a quantity of heat exchange of the evaporator 591 and a quantity of heat exchange of the condenser 591 may be unbalanced.

In this instance, since the volume of the evaporator 591 or the condenser 593 is limited due to a shape of the duct 51, it may be difficult to solve the unbalanced quantity of heat exchange between the evaporator and the condenser by increasing the volume of the evaporator or condenser.

Further referring to FIG. 4A, even though trying to increase a length of the condenser 593 toward the evaporator 591 in order to increase the volume of the condenser 593, it may be interrupted due to the duct 51. Hence, the increase in the length of the condenser is difficult without the change in the shape of the duct.

To solve this problem, the condenser 593 according to the present invention may be configured in a manner that a part of the refrigerant pipe thereof is fixed to the heat-exchanging plate of the evaporator 591.

As illustrated in FIG. 4B, in the structure that the evaporator 591 includes the first heat-exchanging plate 591 b and the first refrigerant pipe 591 a fixed to the first heat-exchanging plate 591 b, and the condenser 593 includes the second heat-exchanging plate 593b to perform heat exchange with air passed through the first heat-exchanging plate 591 b and the second refrigerant pipe 593a fixed to the second heat-exchanging plate 593b, a part of the second refrigerant pipe 593a may be fixed to the first heat-exchanging plate 591 b.

Here, a refrigerant passed through the first heat-exchanging plate 591 b through the first refrigerant pipe 591 a should be supplied to the first heat-exchanging plate 591 b and the second heat-exchanging plate 593b through the second refrigerant pipe 593a via the compressor 595, and a refrigerant discharged from the second heat-exchanging plate 593b through the second refrigerant pipe 593a should be supplied back to the first refrigerant pipe 591 a via a connection pipe 597a and an expansion portion 597.

The clothes treating apparatus according to the present invention may include a fixing structure to fix the compressor 595 between the tub 2 and the cabinet 1.

The compressor 595 generates vibration while compressing a refrigerant discharged from the evaporator 591. When the vibration is transferred to the tub 2 or the cabinet 1, noise is generated. Therefore, the fixing structure is equipped to prevent the problem.

In order to increase efficiency of compressing the refrigerant, the compressor 595 should have a large volume. To fix such large compressor 595 between the cabinet 1 and the tub 2, the fixing structure may be provided.

The fixing structure may include a supporting unit 6 to support the compressor 505.

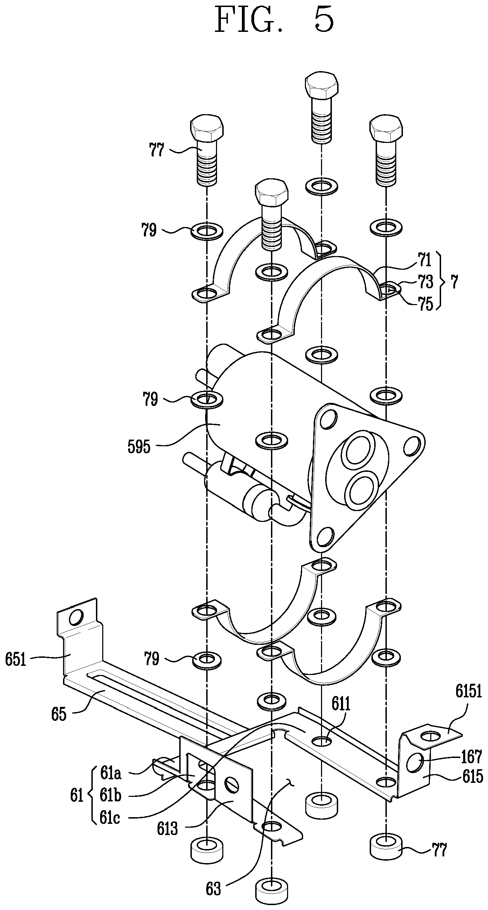

As illustrated in FIGS. 2 and 5, the supporting unit 6 may include a main bracket 61 having a penetrating portion 63 for accommodating the compressor 595 therein, and a sub bracket 65 extending from the main bracket 61.

The main bracket 61 includes the penetrating portion 63 in which the compressor 595 is accommodated or through which the compressor 595 is fixedly inserted.

The penetrating portion 63 may be formed by cutting off a central portion of the main bracket 61, and may have a shape corresponding to a shape of the compressor 595 which is accommodated or inserted therein.

The penetrating portion 63 may be formed in a manner that every surface thereof is surrounded by the main bracket 61. In other words, when the compressor 595 is fixedly inserted into the penetrating portion 63, the penetrating portion 63 may surround the periphery of the compressor 595.

Or, as illustrated in FIG. 5, the penetrating portion 63 may be surrounded by the main bracket 61, except for a partial surface thereof. In other words, when the compressor 595 is fixedly inserted into the penetrating portion 63, the penetrating portion 63 may surround the compressor 595 except for a part of the periphery of the compressor.

Hereinafter, description will be given of a case where the penetrating portion in which the compressor is fixedly inserted has a partial surface open.

The main bracket 61 may include a front member 61 a facing a front panel of the cabinet 1 and located at a front side based on the penetrating portion 63, a left member 61 b located at a left side based on the penetrating portion 63, and a right member 61 c located at a right side based on the penetrating portion 63.

The main bracket 61 may be provided on an upper portion of the tub 2, and located between the duct 51 and a rear panel of the cabinet 1.

The main bracket 61 may include a rear support rib 615 perpendicularly protruding from the main bracket 61 to be fixed to the rear panel of the cabinet 1, and a side support rib 613 perpendicularly protruding from the main bracket 61 to be fixed to a side panel of the cabinet 1.

The side support rib 613 and the rear support rib 615 may include a side bent portion and a rear bent portion 6151, respectively, each of which is formed by bending another end thereof to be locked at the upper portion of the side or rear panel of the cabinet 1.

Here, the side support rib 613 may be provided at the left member 61 b or the right member 61 c and fixed to the side panel of the cabinet 1. Also, the rear support rib 615 may be provided at one or both of the left member 61 b and the right member 61 c and fixed to the rear panel of the cabinet 1.

A fixing hole (not illustrated) may be provided at one of the side support rib 613 or the side bent portion, such that the one of the side support rib 613 or the side bent portion is fixed to the side panel of the cabinet 1 therethrough. This structure may equally be applied to the rear support rib 615 or the rear bent portion 6151.

Meanwhile, the fixing structure may include a clamp 7 to fix the compressor 595 to the supporting unit 6.

The compressor 595 may be inserted through the penetrating portion 63 and fixed to the main bracket 61 using the clamp 7.

The clamp 7 refers to a member which surrounds an outer surface of the compressor 595 for fixing it. In detail, the clamp 7 may include a body 71 to surround the outer surface of the compressor 595 for fixing it, and lugs 73 provided at end portions of the body 71.

The body 71 may have a shape corresponding to an outer shape of the compressor 595, and surround the outer surface of the compressor 595 to fix the compressor 595.

The compressor 595 according to one embodiment of the present invention is in a cylindrical shape with an outer circumferential surface. Therefore, the body 71 is preferably in a circular shape.

To easily assemble the body 71 to the compressor 595, the body 17 preferably includes upper and lower bodies 71 to fix the compressor 595 in a surrounding manner. However, the body 71 may also be provided by three or four in number to surround the outer surface of the compressor 595.

The lugs 73 are formed by protruding from the ends of the body 71, and each lug 73 includes a lug hole 75 through which a coupling member 77 is fixedly inserted.

Meanwhile, the main bracket 61 may include clamp coupling holes 611 formed to communicate with the lug holes 75 to fix the clamp 7.

When the upper and lower bodies 71 are provided, the lugs 73 located at the upper and lower bodies are aligned to face each other and thus the lug holes 75 communicate with each other. Here, the lug holes 75 are aligned to communicate with the clamp coupling holes 611 formed at the main bracket 61, and thereafter the clamp 7 for fixing the compressor 595 is fixed to the main bracket 61 using the coupling members 77.

The coupling members 77 may include bolts, nuts and the like, and any configuration may be applied if it can fix the clamp 7 to the main bracket 61.

To prevent vibration generated in the compressor 595 from being transferred to the main bracket 61, vibration-insulating members 79 may be provided between the coupling member and the lug, between the lugs, between the lug and the main bracket 61 and between the main bracket 61 and the coupling member, respectively.

Hereinafter, description will be given of a coupling method for the compressor 595 to sustain a weight of the compressor 595 and prevent the release of the compressor 595 from the fixed state by the clamp 7 due to vibration while the compressor 595 is driven.

In the meantime, as illustrated in FIG. 5, two clamps 7 for fixing the compressor 595 in the surrounding manner are installed on the compressor 595 with being spaced apart from each other by a predetermined distance, and the lug holes 75 of the two clamps 7 are aligned with the two clamp coupling holes 611 provided at the left member 61 b and the right member 61 c, respectively, to communicate with and be fixed to each other. Accordingly, a structure of supporting the compressor 595 at four points may be formed.

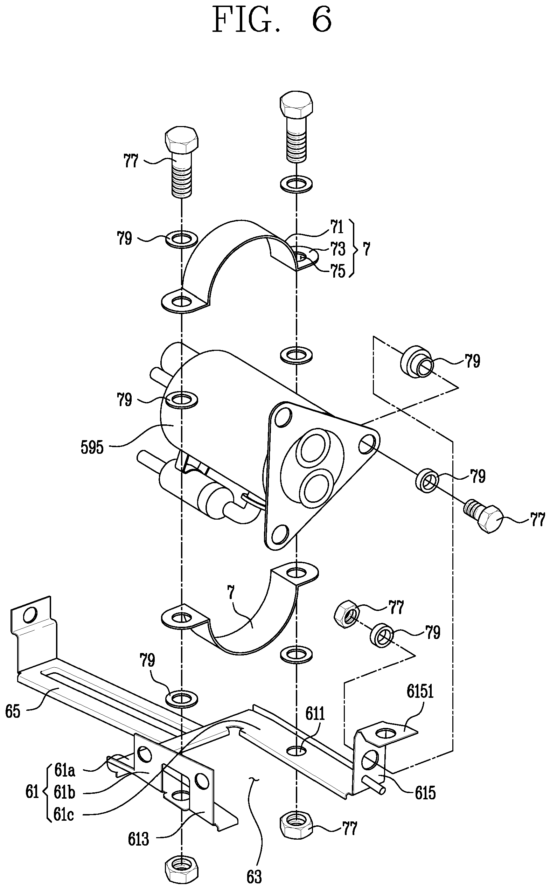

Or, as illustrated in FIG. 6, a three-point supporting hole 167 may be provided at the side support rib 613 or the rear support rib 615, and one clamp 7 for fixing the compressor 595 in the surrounding manner may be used. The lug holes 75 of the clamp 7 may be aligned with the clamp coupling holes 611 provided at the left member 61 b and the right member 61 c, respectively, to communicate with and be fixed to each other, and one side of the compressor 595 may be fixed to the three-point supporting hole 617. Accordingly, a structure of supporting the compressor 595 at three points may be formed.

Also, the supporting unit 6 may include a sub bracket 65 extending from the main bracket 61.

The sub bracket 65 is preferably formed in a manner of extending from the front member 61 a toward a front side of the cabinet 1.

The sub bracket 65 may include a front support rib 651 perpendicularly protruding from an end thereof.

The sub bracket 65 may be fixed to the front panel of the cabinet 1 using the front support rib 651.

Or, the sub bracket 65 may be fixed to a module of the hot air supply unit 5 forming the circulation passage 51, 53 and 55 using the front support rib 651.

Therefore, the weight of the compressor 595 that the main bracket 61 should support may be distributed.

## Claims

1. A clothes treating apparatus comprising:
a cabinet (1) defining appearance thereof;
a clothes receiving unit (3) provided in the cabinet (1) and configured to receive clothes therein;
a hot air supply unit (5) provided with a heat exchanger (593) to heat air supplied into the clothes receiving unit (3) and a compressor (595) connected to the heat exchanger (593) to compress a refrigerant; and
a supporting unit (6) provided in the cabinet (1) and fixed to the cabinet (1) to support the compressor (595),
wherein the supporting unit (6) comprises:
a main bracket (61) having a penetrating portion (63) in which the compressor (595) is accommodated, and wherein the main bracket (61) is fixed to a rear panel or a side panel of the cabinet (1); and
a sub bracket (65) extending from the main bracket (61), wherein the sub bracket (65) is fixed to a front panel of the cabinet (1).

2. The apparatus of according to claim 1, wherein the hot air supply unit (5) further comprises a circulation passage (51, 53, 55) provided at an upper portion of the clothes receiving unit (3) and allowing air to circulate into the clothes receiving unit (3).

3. The apparatus of any of claims 1 to 2, further comprising a clamp (7) configured to fix the compressor (595) to the main bracket (61).

4. The apparatus of claim 3, wherein the clamp (7) comprises:
a body (71) fixing the compressor (595) in a manner of surrounding an outer surface of the compressor (595); and
coupling portions (77) provided at ends of the body (71) to fix the body (71) to the main bracket (61).

5. The apparatus of claim 4, wherein the body (71) comprises:
an upper body surrounding an upper portion of the compressor (595); and
a lower body surrounding a lower portion of the compressor (595).

6. The apparatus according to any one of the claims 3 to 5, wherein the clamp (7) is provided by one to fix the compressor (595) to the main bracket (61), the one clamp (7) fixing one side of the compressor (595) to the main bracket (61).

7. The apparatus according to any one of the claims 3 to 5, wherein the clamp (7) is provided by two to fix the compressor (595) to the main bracket (61).

## Patentansprüche

1. Wäschebehandlungsvorrichtung, die Folgendes umfasst:
ein Gehäuse (1), das ein Erscheinungsbild definiert;
eine Wäscheaufnahmeeinheit (3), die in dem Gehäuse (1) vorgesehen ist und konfiguriert ist, Wäsche aufzunehmen;
eine Heißluftzufuhreinheit (5), die mit einem Wärmetauscher (593) zum Erhitzen von Luft, die der Wäscheaufnahmeeinheit (3) zugeführt wird, und mit einem Kompressor (595), der mit dem Wärmetauscher (593) zum Komprimieren eines Kühlmittels verbunden ist, versehen ist; und
eine Trageinheit (6), die in dem Gehäuse (1) vorgesehen ist und an dem Gehäuse (1) befestigt ist, um den Kompressor (595) zu tragen,
wobei die Trageinheit (6) Folgendes umfasst:
eine Haupthalterung (61), die einen Durchdringungsabschnitt (63) aufweist, in dem der Kompressor (595) aufgenommen ist, wobei die Haupthalterung (61) an einer hinteren Platte oder an einer Seitenplatte des Gehäuses (1) befestigt ist; und
eine zusätzliche Halterung (65), die sich von der Haupthalterung (61) erstreckt, wobei die zusätzliche Halterung (65) an einer vorderen Platte des Gehäuses (1) befestigt ist.

2. Vorrichtung nach Anspruch 1, wobei die Heißluftzufuhreinheit (5) ferner einen Zirkulationsdurchlass (51, 53, 55) umfasst, der an einem oberen Abschnitt der Wäscheaufnahmeeinheit (3) vorgesehen ist und eine Zirkulation von Luft in die Wäscheaufnahmeeinheit (3) ermöglicht.

3. Vorrichtung nach einem der Ansprüche 1 bis 2, die ferner eine Schelle (7) umfasst, die konfiguriert ist, den Kompressor (595) an der Haupthalterung (61) zu befestigen.

4. Vorrichtung nach Anspruch 3, wobei die Schelle (7) Folgendes umfasst:
einen Körper (71), der den Kompressor (595) befestigt, indem er eine äußere Oberfläche des Kompressors (595) umgibt; und
Kopplungsabschnitte (77), die an Enden des Körpers (71) vorgesehen sind, um den Körper (71) an der Haupthalterung (61) zu befestigen.

5. Vorrichtung nach Anspruch 4, wobei der Körper (71) Folgendes umfasst:
einen oberen Körper, der einen oberen Abschnitt des Kompressors (595) umgibt; und
einen unteren Körper, der einen unteren Abschnitt des Kompressors (595) umgibt.

6. Vorrichtung nach einem der Ansprüche 3 bis 5, wobei die Schelle (7) als eine einzelne Schelle vorgesehen ist, um den Kompressor (595) an der Haupthalterung (61) zu befestigen, wobei die einzelne Schelle (7) eine Seite des Kompressors (595) an der Haupthalterung (61) befestigt.

7. Vorrichtung nach einem der Ansprüche 3 bis 5, wobei die Schelle (7) zweifach vorgesehen ist, um den Kompressor (595) an der Haupthalterung (61) zu befestigen.

## Revendications

1. Appareil de traitement de vêtements comprenant :
une carrosserie (1) définissant un aspect de celui-ci ;
une unité de réception de vêtements (3) prévue dans la carrosserie (1) et configurée pour recevoir des vêtements à l'intérieur ;
une unité d'alimentation d'air chaud (5) dotée d'un échangeur de chaleur (593) pour chauffer l'air alimenté vers l'unité de réception de vêtements (3) et un compresseur (595) connecté à l'échangeur de chaleur (593) pour comprimer un réfrigérant ; et
une unité de support (6) prévue dans la carrosserie (1) et fixée à la carrosserie (1) pour supporter le compresseur (595),
dans lequel l'unité de support (6) comprend :
une monture principale (61) ayant une portion de pénétration (63) dans laquelle le compresseur (595) est logé, et dans lequel la monture principale (61) est fixée à un panneau arrière ou un panneau latéral de la carrosserie (1) ; et
une monture annexe (65) s'étendant depuis la monture principale (61),
dans lequel la monture annexe (65) est fixée à un panneau avant de la carrosserie (1).

2. Appareil selon la revendication 1, dans lequel l'unité d'alimentation d'air chaud (5) comprend en outre un passage de circulation (51, 53, 55) prévu à une portion supérieure de l'unité de réception de vêtements (3) et permettant à l'air de circuler jusque dans l'unité de réception de vêtements (3).

3. Appareil selon l'une quelconque des revendications 1 et 2, comprenant en outre une pince (7) configurée pour fixer le compresseur (595) sur la monture principale (61).

4. Appareil selon la revendication 3, dans lequel la pince (7) comprend
un corps (71) qui fixe le compresseur (595) de manière à entourer une surface extérieure du compresseur (595) ; et des portions de couplage (77) prévues à l'extrémité du corps (71) pour fixer le corps (71) sur la monture principale (61).

5. Appareil selon la revendication 4, dans lequel le corps (71) comprend :
un corps supérieur entourant une portion supérieure du compresseur (595) ; et
un corps inférieur entourant une portion inférieure du compresseur (595).

6. Appareil selon l'une quelconque des revendications 3 à 5, dans lequel la pince (7) est prévue au nombre de un afin de fixer le compresseur (595) sur la monture principale (61), ladite une pince (7) fixant un côté du compresseur (595) sur la monture principale (61).

7. Appareil selon l'une quelconque des revendications 3 à 5, dans lequel la pince (7) est prévue au nombre de deux afin de fixer le compresseur (595) sur la monture principale (61).
